# EUROPEAN PATENT APPLICATION

(11) **EP 4 733 261 A1**
(43) Date of publication of application: **29.04.2026**
(21) Application number: 25203029.1
(22) Date of filing: 18.09.2025
(51) Int. Cl.: C01G 45/22, C01G 53/42, C01G 53/506, H01M 4/00

(54) **POSITIVE ELECTRODE ACTIVE MATERIAL, POSITIVE ELECTRODE SLURRY, POSITIVE ELECTRODE SHEET, BATTERY AND VEHICLE**

(30) Priority: 17.10.2024 CN 202411458540; 21.02.2025 WO PCT/CN2025/078388
(71) Applicant: Eve Power Co., Ltd., Jingmen, Hubei 448000 (CN)
(72) Inventor: WU, Tingting, Jingmen, 448000 (CN); Chen, Meng, Jingmen, 448000 (CN); Wen, Shengyao, Jingmen, 448000 (CN); Gao, Jianhang, Jingmen, 448000 (CN); Liu, Fanfen, Jingmen, 448000 (CN)
(74) Representative: Nederlandsch Octrooibureau

(57) **Abstract**

A positive electrode active material, a positive electrode slurry, a positive electrode sheet, a battery and a vehicle are provided herein, belonging to a field of battery technology. The positive electrode active material includes lithium manganese iron phosphate and lithium nickel cobalt manganese oxide; where a mass ratio of lithium manganese iron phosphate to lithium nickel cobalt manganese oxide is (50-95): (5-50); a general chemical formula of lithium nickel cobalt manganese oxide is: LiNiₐCo_{b}Mn_{(1-a-b)}O₂, 0.6≤a<1, 0<b<0.5, 0<a+b<1.

## Description

### TECHNICAL FIELD

The present application relates to the field of battery technology, and in particular to a positive electrode active material, a positive electrode slurry, a positive electrode sheet, a battery and a vehicle.

### BACKGROUND

With a constant progress of a battery technology, an energy density of lithium iron phosphate (LFP) has reached a bottleneck, and industry researchers have gradually turned their attention to lithium manganese iron phosphate (LMFP) materials. Lithium manganese iron phosphate has the same olivine structure as lithium iron phosphate, has a good structural stability, and can have both safety and cycle advantages of lithium iron phosphate. Meanwhile, due to the introduction of manganese into lithium manganese iron phosphate, an average discharge voltage of the material can reach 3.6V, which has a relatively high energy density advantage over lithium iron phosphate. However, compared with a ternary material, the energy density advantage of lithium manganese iron phosphate has still a big shortage.

### SUMMARY

The present application provides a positive electrode active material, comprising lithium manganese iron phosphate and lithium nickel cobalt manganese oxide. A mass ratio of lithium manganese iron phosphate to lithium nickel cobalt manganese oxide is (50-95): (5-50). A general chemical formula of lithium nickel cobalt manganese oxide is: LiNiₐCo_{b}Mn_{(1-a-b)} O₂, 0.6≤ a<1, 0<b<0.5, 0<a+b<1.

The present application also provides a positive electrode slurry, comprising the positive electrode active material described above.

The present application also provides a positive electrode sheet comprising a positive electrode foil and a positive electrode active layer coated on the positive electrode foil. The positive electrode active layer is prepared by using the positive electrode slurry described above, or the positive electrode active layer includes the positive electrode active material described above.

The present application also provides a battery, comprising the positive electrode sheet described above.

The present application also provides a vehicle, comprising the battery described above.

### BRIEF DESCRIPTION OF THE DRAWINGS

FIG. 1 is a graph for a thermal runaway test of the lithium-ion battery in Example 2 of the present application;
FIG. 2 is a graph for a thermal runaway test of the lithium-ion battery in Comparative Example 1;
FIG. 3 is a graph for a thermal runaway test of a lithium-ion battery in Comparative Example 2;
FIG. 4 is a graph for normal temperature rate discharge of some Examples and Comparative Examples of the present application.

### DETAILED DESCRIPTION

In the description of the present application, unless otherwise clearly specified and limited, the terms "interconnected", "connected", and "fixed" should be understood in a broad sense. For example, it may be a fixed connection, a detachable connection, or an integral connection; it may also be a mechanical connection or an electrical connection; it may be a direct connection or an indirect connection through an intermediate medium, it may be the communication inside two elements or the interaction relationship between two elements. For one of ordinary skill in the present art, the specific meanings of the above terms in the present application may be understood according to the specific circumstances.

In the present application, unless otherwise clearly specified and limited, a first feature being "above" or "below" a second feature may include the first feature being direct contact with the second feature, or may include the first feature being not in contact with the second feature but being in contact with each other through another feature between them. Moreover, a first feature being "above", "on" and "top" a second feature includes the first feature being directly above and obliquely above the second feature, and the first feature having a higher horizontal height than the second feature. The first feature being "below", "under" and "underneath" a second feature includes the first feature being directly below and obliquely below the second feature, and the first feature having a lower horizontal height than the second feature.

In the description of the present embodiment, the directional or positional relationships such as the terms "upper", "lower", "left", "right", "front" and "rear" are based on the directional or positional relationships shown in the drawings, and are for the convenience of description and simplification of operation, rather than indicating or implying that the device or element referred to must have a specific direction, be constructed and operated in a specific direction, and therefore cannot be understood as limiting the present application. In addition, the terms "first" and "second" are used to distinguish in the description and have no special meaning.

In the related art, in order to improve a comprehensive performance of the battery, lithium manganese iron phosphate is blended with the ternary material. However, the blending system in the related art mainly takes into account improving an energy density of the battery to achieve a purpose of reducing cost, but ignores a safety performance of the battery, such that the battery can't achieve both the energy density and the safety performance, causing a safety risk.

The positive electrode active material provided in the embodiment of the present application includes lithium manganese iron phosphate and lithium nickel cobalt manganese oxide, and the mass ratio of lithium manganese iron phosphate to lithium nickel cobalt manganese oxide is (50-95): (5-50). The general chemical formula of lithium nickel cobalt manganese oxide is: LiNiₐCo_{b}Mn_{(1-a-b)} O₂, 0.6≤ a<1, 0<b<0.5, 0<a + b<1. Lithium manganese iron phosphate has the same olivine crystal structure as lithium iron phosphate, with a high safety performance, but the energy density of lithium manganese iron phosphate is lower relative to that of the ternary material. The general chemical formula of lithium nickel cobalt manganese oxide in the present application is: LiNiₐCo_{b}Mn_{(1-a-b)} O₂, 0.6 ≤ a<1, 0<b< 0.5, 0<a + b<1, that is, in lithium nickel cobalt manganese oxide, the molar content of the nickel element accounts for 60% or more of the total molar content of the three elements of nickel, cobalt and manganese, and has a high energy density. However, due to the high nickel content, lithium nickel cobalt manganese oxide has a problem of poor thermal stability, which reduces its safety when used in the battery. In the present application, lithium manganese iron phosphate and lithium nickel cobalt manganese oxide are compounded as the positive electrode active material, and the mass ratio of the two is controlled within the range of (50-95): (5-50), so that when the positive electrode active material with a proportion of lithium nickel cobalt manganese oxide not exceeding 50% is applied to the battery, the positive electrode active material can have high safety performance while having high energy density, thereby improving the comprehensive performance.

The positive electrode slurry provided in the embodiment of the present application, by including the positive electrode active material described above, can have high safety performance while having a high energy density, thereby improving the comprehensive performance.

The positive electrode sheet provided in the embodiment of the present can have high safety performance while having a high energy density, improving the comprehensive performance.

The battery provided in the embodiment of the present application can have high safety performance while having a high energy density, improving the comprehensive performance.

In the first aspect, the embodiments of the present application provide a positive electrode active material, including lithium manganese iron phosphate and lithium nickel cobalt manganese oxide. The mass ratio of lithium manganese iron phosphate (LMFP) to lithium nickel cobalt manganese oxide (NCM) is (50-95): (5-50). The general chemical formula of lithium nickel cobalt manganese oxide is: LiNiₐCo_{b}Mn_{(1-a-b)}O₂, 0.6 ≤ a<1, 0<b<0.5, 0<a + b<1. Lithium manganese iron phosphate has the same olivine crystal structure as lithium iron phosphate, with higher safety performance, but has a lower energy density relative to that of the ternary material. The general chemical formula of the lithium nickel cobalt manganese oxide in the embodiment of the present application is: LiNiₐCo_{b}Mn_{(1-a-b)}O₂, 0.6≤a<1, 0<b<0.5, 0<a + b<1, that is, in the lithium nickel cobalt manganese oxide, the molar content of the nickel element accounts for 60% or more of the total molar content of the three elements of nickel, cobalt and manganese, with a high energy density. However, due to the high nickel content, the lithium nickel cobalt manganese oxide has a problem of poor thermal stability, which reduces its safety when used in the battery. In the embodiment of the present application, lithium manganese iron phosphate and lithium nickel cobalt manganese oxide are compounded as the positive electrode active material, and the mass ratio of the two is controlled within the range of (50-95) :(5-50), so that when the positive electrode active material is applied to the battery, the battery can have high safety performance while having high energy density, improving the comprehensive performance.

Specifically, lithium manganese iron phosphate (LMFP) has the same olivine crystal structure as lithium iron phosphate (LFP), both of which are orthorhombic crystal systems, belonging to the Pnma space point group. The general chemical formula of lithium manganese iron phosphate is LiMnₓFe₍₁₋ₓ₎ PO₄, 0<x<1. Each of LMFP unit cells is consisted of 4 basic units, in which lithium (Li) and manganese (iron) [Mn (Fe)] are located at the 4a site and 4c site of the octahedron respectively, forming the deformed LiO₆ and MnO₆ (FeO₆) octahedrons. In addition, phosphorus (P) and oxygen (O) form a PO₄ tetrahedron, located at the 4c site of the tetrahedron. Since P and O form a high-strength P-O covalent bond, it is difficult for O to escape from the crystal structure, so LMFP has relatively high safety performance. The ternary material has the characteristics of high theoretical specific capacity (>250 mAh/g) and high working voltage (~3.65V), becoming the mainstream of the positive electrode materials with high energy density, but with the increase of nickel content in the ternary material, the thermal stability of the ternary material will decrease. When the molar content of nickel in lithium nickel cobalt manganese oxide is 60% or more, the safety performance of the lithium nickel cobalt manganese oxide when directly applied to the battery is poor. In the present application, lithium manganese iron phosphate and lithium nickel cobalt manganese oxide with high nickel content are compounded in a mass ratio of (50-95): (5-50), so that when the positive electrode active material is applied to the battery, the battery can have high safety performance while having high energy density, improving the comprehensive performance.

Exemplarily, the mass ratio of lithium manganese iron phosphate to lithium nickel cobalt manganese oxide may be 95:5, 90:10, 80:20, 70:30, 60:40 or 50:50. The chemical formula of lithium nickel cobalt manganese oxide may be: LiNi_{0.6}Co_{0.2}Mn_{0.2}O₂, LiNi_{0.7}Co_{0.2}Mn_{0.1}O₂, LiNi_{0.7} Co_{0.1}Mn_{0.2}O₂ or LiNi_{0.8}Co_{0.1}Mn_{0.1}O₂.

In some embodiments, the median particle diameter D50 of lithium manganese iron phosphate is 0.5 µm - 5 µm, and the specific surface area is 14 m²/g - 25 m²/g. The particle diameter of lithium manganese iron phosphate will affect its electrochemical and mechanical properties. Lithium manganese iron phosphate with a smaller particle diameter has a larger specific surface area and can provide more active sites, thereby accelerating the intercalation and de-intercalation reaction of lithium ions. Lithium manganese iron phosphate with a smaller particle diameter has a shorter ion diffusion path, such that the lithium ions migrate more rapidly during the charge-discharge process, reducing the phenomenon of the stress concentration and lattice distortion caused by long-term charge-discharge, and in turn improving the structural stability of the material. However, if the particle diameter of lithium manganese iron phosphate is too small, it is easy to form agglomerates, which increases the difficulty of preparation, and easily leads to a decrease in the mechanical strength of the lithium manganese iron phosphate material, affecting the cycle life and stability of the lithium manganese iron phosphate material. Therefore, in the embodiment of the present application, the median particle diameter D50 of lithium manganese iron phosphate is set to 0.5 µm - 5 µm. The specific surface area of lithium manganese iron phosphate is related to its particle diameter. The larger the particle diameter, the smaller the specific surface area, and the smaller the particle diameter, the larger the specific surface area. Accordingly, in the embodiment of the present application, the specific surface area of lithium manganese iron phosphate is set to 14 m² / g - 25 m²/g.

Exemplarily, the median particle diameter D50 of the lithium manganese iron phosphate may be 0.5 µm, 1 µm, 1.5 µm, 2 µm, 2.5 µm, 3 µm, 3.5 µm, 4 µm, 4.5 µm or 5 µm.

Exemplarily, the specific surface area of lithium manganese iron phosphate is 14 m²/g, 16 m²/g, 18 m²/g, 20 m²/ g, 22 m² / g or 25 m² / g.

In some embodiments, the median particle diameter D50 of the lithium nickel cobalt manganese oxide is 4 µm-18 µm, and the specific surface area is 0.2 m² /g - 1.5 m² /g. Similar to lithium manganese iron phosphate, the particle diameter of the nickel cobalt manganese oxide will also affect its electrochemical performance and cycle life. When the nickel cobalt manganese oxide is applied to the battery, if the particle diameter of the nickel cobalt manganese oxide is too small, the side reactions increase, reducing the safety of the battery. If the particle diameter of the nickel cobalt manganese oxide is too large, it will possibly result in lower capacity of the battery. By keeping the particle diameter of the nickel cobalt manganese oxide within a certain range, the charge-discharge efficiency and the cycle life of the battery may be improved while ensuring safety.

Exemplarily, the median particle diameter D50 of lithium nickel cobalt manganese oxide may be 4 µm, 6 µm, 8 µm, 10 µm, 12 µm, 14 µm, 16 µm or 18 µm;
Exemplarily, the specific surface area of lithium nickel cobalt manganese oxide is 0.2 m²/g, 0.5 m²/g, 0.8 m²/g, 1.0 m²/g, 1.2 m²/g or 1.5 m²/g.

In some embodiments, the chemical formula of lithium manganese iron phosphate is LiMn_{0.6}Fe_{0.4}PO₄. The larger manganese content in LiMn_{0.6}Fe_{0.4}PO₄ can produce higher plateau voltage of manganese reaction during charge-discharge process and can bring higher energy density. In addition, the larger manganese content also helps to improve the low temperature performance and safety performance of lithium manganese iron phosphate.

In some embodiments, the chemical formula of lithium nickel cobalt manganese oxide is at least one of LiNi_{0.8}Co_{0.1}Mn_{0.1}O₂, LiNi_{0.7}Co_{0.1}Mn_{0.2}O₂ and LiNi_{0.9}Co_{0.05}Mn_{0.05}O₂. LiNi_{0.8}Co_{0.1}Mn_{0.1} O₂, LiNi_{0.7}Co_{0.1}Mn_{0.2}O₂ and LiNi_{0.9}Co_{0.05}Mn_{0.05}O₂ have a large nickel content, which can significantly improve the energy density of lithium nickel cobalt manganese oxide. The nickel element has a larger activity during the charge-discharge process and can provide more capacity contribution. And the larger nickel content also helps to reduce the polarization of lithium nickel cobalt manganese oxide and makes it easier to conduct intercalation and de-intercalation of the lithium ions, thereby shortening the charge-discharge time and improving the charge-discharge efficiency. In addition, the increase in the content of nickel element corresponds to the decrease in the content of cobalt element in lithium nickel cobalt manganese oxide, thereby reducing the cost of the material. This is because that cobalt is a rare and expensive metal element, and the reserves of nickel are relatively abundant and the price is relatively low.

In some embodiments, the mass ratio of lithium manganese iron phosphate to lithium nickel cobalt manganese oxide is 90:10. The high addition ratio of lithium manganese iron phosphate ensures safety performance and significantly improves energy density compared to the case of using only lithium manganese iron phosphate in the positive electrode active material.

In some other embodiments, the mass ratio of lithium manganese iron phosphate to lithium nickel cobalt manganese oxide is 70:30. By increasing the addition ratio of lithium nickel cobalt manganese oxide, the energy density can be further enhanced on a basis of ensuring safety performance.

In some other embodiments, the mass ratio of lithium manganese iron phosphate to lithium nickel cobalt manganese oxide is 50:50. At such ratio, it can be ensured that there is no fire or explosion during thermal runaway, and the overcharge test can be passed. In addition, since the addition ratio of lithium nickel cobalt manganese oxide is further increased, the energy density can also be significantly improved.

In a second aspect, an embodiment of the present application provides a positive electrode slurry, including the positive electrode active material as described above.

The positive electrode slurry provided in the embodiment of the present application has the beneficial effects of the positive electrode active material as described above, which will not be described in detail here.

In some embodiments, the positive electrode slurry further includes a positive electrode conductive agent, a positive electrode binder and a positive electrode dispersant. The mass ratio of the positive electrode active material, the positive electrode conductive agent, the positive electrode binder and the positive electrode dispersant is (95-98): (0.5-2.5): (1-3): (0-1). The positive electrode active material is a key component for storage and release in the battery. By setting a higher proportion of the positive electrode active material, it helps to improve the energy density of the battery. At the same volume or weight, the battery can store more electrical energy, thereby extending the service time. An appropriate amount of the positive electrode conductive agent helps to form an effective conductive network, reduce the internal resistance of the battery, and increase the transmission rate of electron and ion, thereby enhancing the charge-discharge performance of the battery. The positive electrode binder plays a key role in maintaining the structural integrity and stability of the positive electrode sheet. By controlling the addition ratio of the positive electrode binder within a suitable range, it can ensure that the positive electrode active material does not fall off under action of the expansion and contraction during the charge-discharge process and the stability of the structure is maintained, thereby improving the cycle life and safety of the battery. The dispersant helps to improve the fluidity of the positive electrode slurry and ensures that the positive electrode active material can be evenly distributed.

In some embodiments, the positive electrode conductive agent includes at least one of carbon nanotube, graphene and acetylene black. The carbon nanotube has a high electrical conductivity, and using it as the positive electrode conductive agent helps to reduce the internal resistance of the battery and improve the charge-discharge efficiency of the battery. And the carbon nanotube has also good mechanical strength and flexibility, can withstand the volume change of the positive electrode active material during the charge-discharge process of the battery, reduce the risk of particle fracture and structural damage of the positive electrode active material, thereby improving the cycle stability of the battery. When the carbon nanotube is used as the positive electrode conductive agent, the addition amount can be reduced, which helps to improve the addition ratio of the positive electrode active material, and in turn increases the energy density of the battery. Graphene has a large specific surface area, which helps to form storage gaps of the electrolyte solution and increase the contact area between the positive electrode active material and the electrolyte solution, thereby enhancing the charge-discharge efficiency of the battery. And graphene has excellent mechanical properties, which can improve the volume energy density of the positive electrode sheet, increase the bendability and peel strength of the positive electrode sheet, thereby improving the overall stability of the battery. In addition, the graphene has also good thermal conductivity, which can reduce the thermal impedance of the battery and improve the thermal stability of the battery. Acetylene black has moderate thermal conductivity, low nitrogen cost, and good mechanical stability, which can inhibit shedding and damage of the material.

In a third aspect, an embodiment of the present application provides a positive electrode sheet, including a positive electrode foil and a positive electrode active layer coated on the positive electrode foil. The positive electrode active layer is prepared using the positive electrode slurry as described above, or the positive electrode active layer includes the positive electrode active material as described above.

The positive electrode sheet provided in the embodiment of the present application also has the beneficial effects of the positive electrode active material as described above, which will not be described in detail here.

In some embodiments, the positive electrode foil is a carbon-coated aluminum foil. The carbon-coated aluminum foil includes an aluminum foil and a carbon-coated layer coated on the aluminum foil. A thickness of the aluminum foil is 6 µm-20 µm, and the thickness of the carbon - coated layer is greater than 0 µm and less than or equal to 1 µm.

The carbon-coated aluminum foil includes the aluminum foil and the carbon coating layer coated on the aluminum foil. The carbon coating layer can optimize the surface properties of the aluminum foil, so that the positive electrode slurry can be more tightly and evenly attached to the aluminum foil, which reduces the ineffective space, thereby improving the energy density of the battery. The thickness of the aluminum foil is set between 6 µm - 20 µm, which not only ensures sufficient mechanical strength, but also reduces the weight of the battery and improves the energy density of the battery. The thickness of the carbon coating layer is set within the range of greater than 0 µm and less than or equal to 1 µm, which is ultra-thin and uniform, and helps to improve the overall performance of the battery.

In some embodiments, the positive electrode binder includes at least one of polyvinylidene fluoride, polytetrafluoroethylene and polyacrylic acid. Polyvinylidene fluoride (PVDF) has excellent chemical stability and corrosion resistance, ensuring reliability and safety during use. PVDF has also a good capability of high voltage resistance and can remain stable under high voltage conditions without being oxidized or deteriorated. PVDF has good solubility and dissolution rate, can be evenly dispersed on the surface of the positive electrode slurry and the positive electrode sheet to form a uniform bonding layer, and has high flexibility and bonding force, which can reduce the shedding phenomenon of the positive electrode active material during repeated expansion and contraction. Polytetrafluoroethylene (PTFE) has excellent corrosion resistance, strong stability, and good high temperature stability, which can be used for a long time at high temperature without decomposition. Polyacrylic acid (PAA) has good adhesion force and can be connected to some functional groups on the surface of the positive electrode active material together through hydrogen bonds to form a stable bonding layer, which helps to prevent the shedding and pulverization of the positive electrode active material. PAA can also effectively inhibit the volume expansion of the positive electrode active material during the charge-discharge process, thereby extending the cycle life of the battery. In addition, PAA itself has a small volume expansion coefficient and a large thermal diffusion coefficient. Using PAA as the positive electrode binder makes the battery safer when used under high power charge-discharge and high temperature.

In a fourth aspect, an embodiment of the present application provides a battery, including the positive electrode sheet as described above.

The battery provided in the embodiment of the present application also has the beneficial effects of the positive electrode active material as described above, which will not be described in detail here.

In some embodiments, the battery further includes a negative electrode sheet, an electrolyte solution, and a separator.

The negative electrode sheet includes a negative electrode foil, a negative electrode active material, a negative electrode conductive agent and a negative electrode binder. The negative electrode foil is a copper foil or a copper mesh with a thickness of 4 µm -12 µm. The copper foil and the copper mesh have excellent conductivity and low resistivity, and can quickly conduct the current in the battery. Using them as the negative electrode foil can provide an efficient conductive channel for the intercalation and de-intercalation process of the lithium ions, thereby improving the charge-discharge efficiency and response speed of the battery. The copper foil and the copper mesh have high mechanical strength, can protect the internal structure of the battery, and increase the stability and strength of the internal structure of the battery. By controlling the thickness of the negative electrode foil to be 4 µm - 12 µm, it can not only ensure the structural strength of the battery, but also improve the energy density of the battery by reducing the mass of the negative electrode foil.

The negative electrode conductive agent is at least one of carbon nanotube, carbon black and acetylene black. The advantages of carbon nanotube and acetylene black have been described in the positive electrode conductive agent, and their application in the negative electrode conductive agent has similar advantages, which will not be repeated here. Carbon black has good electrical conductivity, can improve the conductivity of the negative electrode sheet, reduce the internal resistance of the battery, and carbon black can be evenly dispersed in the negative electrode active material to form a conductive network, accelerate the electron transmission rate, and improve performance of the battery. By using carbon black as the negative electrode conductive agent, the conductivity can be significantly improved on the basis of a lower addition amount, which helps to increase the addition amount of the negative electrode active materials in the negative electrode sheet. Carbon black has also excellent chemical and physical stability, low cost, and good compatibility with other materials.

The electrolyte solution includes an electrolyte, an organic solvent and an additive. The electrolyte is at least one of lithium hexafluorophosphate (LIPF₆), lithium bisfluorosulfonimide (LiFSI) and lithium bis(trifluoromethanesulfonyl)imide (LiTFSI). The organic solvent includes at least one of ethylene carbonate (EC), dimethyl carbonate (DMC), diethyl carbonate (DEC), polycarbonate (PC) and ethyl methyl carbonate (EMC). The additive includes at least one of vinylene carbonate (VC), vinyl sulfate (DTD), methylene methanedisulfonate (MMDS), lithium dioxalatoborate (LiBOB) and 1,3-propane sultone (PS), and the content of the additive accounts for 0.2%-1.5% of the total mass of the electrolyte solution.

The separator includes a base film and a separator coating coated on the base film. The material of the base film is polypropylene (PP) or polyethylene (PE). The material of the separator coating includes at least one of aluminum oxide, boehmite, magnesium hydroxide and barium sulfate. The thickness of the base film is 5 µm-16 µm, the thickness of the separator coating is 0.5 µm - 5 µm, and the tensile strength of the separator is greater than 200 MPa.

In a fifth aspect, an embodiment of the present application provides a vehicle including the battery as described above.

The vehicle provided in the embodiment of the present application also has the beneficial effects of the positive electrode active material as described above, which will not be described in detail here.

The following examples are further described in conjunction with specific embodiments. It should be understood that these examples are only used to illustrate the present application and are not intended to limit the scope of the present application. The experimental methods in the following examples that do not specify specific conditions are usually based on the conditions recommended by the manufacturer.

It should be noted that, except for the conditions stated in the Examples and Comparative Examples, the conditions in the Examples and Comparative Examples remain the same.

### Example 1

In this Example: in the positive electrode sheet, the positive electrode active material includes 90% of LiMn_{0.6}Fe_{0.4}PO₄ and 10% of LiN_{0.8}Co_{0.1}Mn_{0.1}O₂; in the negative electrode sheet, the negative electrode active material is graphite; the electrolyte in the electrolyte solution is LiPF₆; a 9 +2+2 separator is used as the separator (that is, the thickness of the base film is 9 µm, and the thicknesses of the boehmite coatings on both sides of the base film are each 2 µm). The positive electrode sheet, the negative electrode sheet, the electrolyte and the separator were assembled to obtain a 20 Ah lithium-ion battery.

The median particle diameter of LiMn_{0.6}Fe_{0.4}PO₄ is 1.5 µm, the specific surface area is 22 m²/g; the median particle diameter of LiNi_{0.8}Co_{0.1}Mn_{0.1}O₂ is 10 µm, and the specific surface area is 0.8 m²/g.

### Example 2

In this Example: in the positive electrode sheet, the positive electrode active material includes 70% of LiMn_{0.6}Fe_{0.4}PO ₄ and 30% of LiNi_{0.8}Co_{0.1}Mn_{0.1}O₂; in the negative electrode sheet, the negative electrode active material is graphite; the electrolyte in the electrolyte solution is LiPF₆; a 9 +2+2 separator is used as the separator (i.e., the thickness of the base film is 9 µm, and the boehmite coatings on both sides of the base film are each 2 µm). The positive electrode sheet, the negative electrode sheet, the electrolyte and the separator were assembled to obtain a 20 Ah lithium-ion battery.

The median particle diameter of LiMn_{0.6}Fe_{0.4} PO₄ is 1.5 µm, the specific surface area is 22 m² /g; and the median particle diameter of LiNi_{0.8}Co_{0.1}Mn_{0.1}O₂ is 10 µm, and the specific surface area is 0.8 m²/g.

### Example 3

In this Example: in the positive electrode sheet, the positive electrode active material includes 50% LiMn_{0.6}Fe_{0.4}PO₄ and 50% LiNi_{0.8}Co_{0.1}Mn_{0.1}O₂; in the negative electrode sheet, the negative electrode active material is graphite; the electrolyte in the electrolyte is LiPF₆; a 9 +2+2 separator is used as the separator (i.e., the thickness of the base film is 9 µm, and the boehmite coatings on both sides of the base film are each 2 µm). The positive electrode sheet, the negative electrode sheet, the electrolyte and the separator were assembled to obtain a 20 Ah lithium-ion battery.

The median particle diameter of LiMn_{0.6}Fe_{0.4}PO₄ is 1.5 µm, the specific surface area is 22 m²/g; the median particle diameter of LiNi_{0.8}Co_{0.1}Mn_{0.1}O₂ is 10 µm, and the specific surface area is 0.8 m²/g.

### Example 4

In this Example: in the positive electrode sheet, the positive electrode active material includes 95% LiMn_{0.6}Fe_{0.4}PO₄ and 5% LiNi_{0.8}Co_{0.1}Mn_{0.1}O₂; in the negative electrode sheet, the negative electrode active material is graphite; the electrolyte in the electrolyte solution is LiPF₆; a 9 +2+2 separator is used as the separator (i.e., the thickness of the base film is 9µm, and the boehmite coatings on both sides of the base film are each 2 µm). The positive electrode sheet, the negative electrode sheet, the electrolyte solution and the separator were assembled to obtain a 20 Ah lithium-ion battery.

The median particle diameter of LiMn_{0.6}Fe_{0.4}PO₄ is 3 µm, the specific surface area is 18 m²/g; and the median particle diameter of LiNi_{0.8}Co_{0.1}Mn_{0.1}O₂ is 12 µm and the specific surface area is 0.7 m²/g.

### Example 5

In this Example: in the positive electrode sheet, the positive electrode active material includes 80% of LiMn_{0.6}Fe_{0.4}PO₄ and 20% of LiNi_{0.8}Co_{0.1}Mn_{0.1}O₂; in the negative electrode sheet, the negative electrode active material is graphite; the electrolyte in the electrolyte solution is LiPF₆; a 9+2+2 separator is used as the separator (i.e., the thickness of the base film is 9µm, and the boehmite coatings on both sides of the base film are each 2 µm). The positive electrode sheet, the negative electrode sheet, the electrolyte solution and the separator were assembled to obtain a 20 Ah lithium-ion battery.

The median particle diameter of LiMn_{0.6}Fe_{0.4}PO₄ is 0.8 µm, the specific surface area is 24 m²/g; and the median particle diameter of LiNi_{0.8}Co_{0.1}Mn_{0.1}O₂ is 8 µm, the specific surface area is 1.3 m²/g.

### Example 6

In this Example: in the positive electrode sheet, the positive electrode active material includes 60% of LiMn_{0.6}Fe_{0.4}PO₄ and 40% of LiNi_{0.8}Co_{0.1}Mn_{0.1}O₂; in the negative electrode sheet, the negative electrode active material is graphite; the electrolyte in the electrolyte solution is LiPF₆; a 9+2+2 separator is used as the separator (i.e., the thickness of the base film is 9 µm, and the boehmite coatings on both sides of the base film are each 2 µm). The positive electrode sheet, the negative electrode sheet, the electrolyte solution and the separator were assembled to obtain a 20 Ah lithium-ion battery.

The median particle diameter of LiMn_{0.6}Fe_{0.4}PO₄ is 4 µm, the specific surface area is 15 m²/g; the median particle diameter of LiNi_{0.8}Co_{0.1}Mn_{0.1}O₂ is 6 µm, and the specific surface area is 1.4 m²/g.

### Comparative Example 1

In the present Comparative Example: in the positive electrode sheet, the positive electrode active material only includes LiMn_{0.6}Fe_{0.4}PO₄; in the negative electrode sheet, the negative electrode active material is graphite; the electrolyte in the electrolyte solution is LiPF₆; a 9 +2+2 separator is used as the separator (i.e., the thickness of the base film is 9 µm, and the boehmite coatings on both sides of the base film are each 2 µm). The positive electrode sheet, the negative electrode sheet, the electrolyte solution and the separator are assembled to obtain a 20 Ah lithium-ion battery.

The median particle diameter of LiMn_{0.6}Fe_{0.4}PO₄ is 1.5 µm, and the specific surface area is 22 m²/g.

### Comparative Example 2

In the present Comparative Example: in the positive electrode sheet, the positive electrode active material includes 40% of LiMn_{0.6}Fe_{0.4}PO₄ and 60% of LiNi_{0.8}Co_{0.1}Mn_{0.1}O₂; in the negative electrode sheet, the negative electrode active material is graphite; the electrolyte in the electrolyte solution is LiPF₆; a 9 +2+2 separator is used as the separator (that is, the thickness of the base film is 9 µm, and the boehmite coatings on both sides of the base film are each 2 µm). The positive electrode sheet, the negative electrode sheet, the electrolyte solution and the separator were assembled to obtain a 20Ah lithium-ion battery.

The median particle diameter of LiMn_{0.6}Fe_{0.4}PO₄ is 1.5 µm, the specific surface area is 22 m²/g; and the median particle diameter of LiNi_{0.8}Co_{0.1}Mn_{0.1}O₂ is 10 µm, and the specific surface area is 0.8 m²/g.

### Comparative Example 3

In the present Comparative Example: in the positive electrode sheet, the positive electrode active material includes 30% of LiMn_{0.6}Fe_{0.4}PO₄ and 70% of LiNi_{0.8}Co_{0.1}Mn_{0.1}O₂; in the negative electrode sheet, the negative electrode active material is graphite; the electrolyte in the electrolyte solution is LiPF₆; a 9 +2+2 separator is used as the separator (i.e., the thickness of the base film is 9 µm, and the boehmite coatings on both sides of the base film are each 2 µm). The positive electrode sheet, the negative electrode sheet, the electrolyte solution and the separator are assembled to obtain a 20 Ah lithium-ion battery.

The median particle diameter of LiMn_{0.6}Fe_{0.4}PO₄ is 1.5 µm, the specific surface area is 22 m²/g; and the median particle diameter of LiNi_{0.8}Co_{0.1}Mn_{0.1}O₂ is 10 µm, and the specific surface area is 0.8 m²/g.

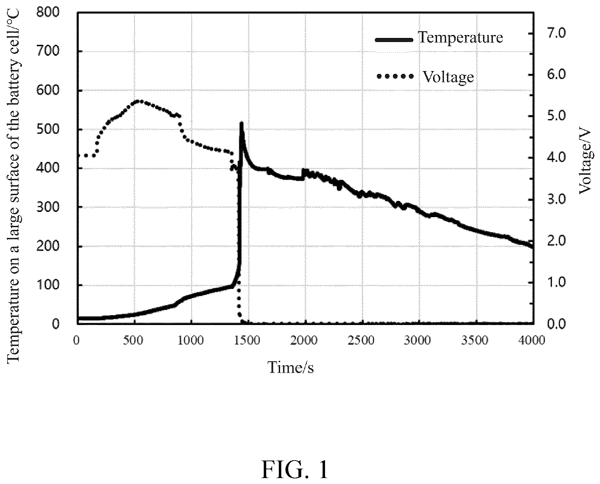

The gram capacity and safety performance tests were performed on the batteries assembled in Examples 1-3 and Comparative Examples 1-3. The gram capacity test process was as follows: at 25°C, the battery was charged to 4.2 V at a current of 0.2 C, and then discharged to 2.5 V at a current of 0.2 C for testing. The safety performance includes thermal runaway test and overcharge test. The method of thermal runaway test is as follows: according to the method of GB 38032-2020, after the test object was charged to 100% SOC, the test object was further charged for 12 minutes with a 1C rate charging current; the heating device was immediately started and the test object was continuously heated at the maximum power of the heating device. When thermal runaway occurred or the temperature of the monitoring point reached 300°C, triggering was stopped and the heating device was turned off. During the heating process and within 1 hour after the heating ended, if a fire or explosion phenomena occurred, the test was terminated. The method of overcharge test is as follows: according to the method of national standard GB 38032-2020, the battery was fully charged to 4.2V in a manner of a constant current and constant voltage, and then charged to 4.62V or 115% SOC at a current constant current of 1C rate, then charging was stopped. The test results are shown in Table 1 and FIG. 1-FIG. 3:
Table 1 Table of the test results of gram capacity and safety performance in different Examples and Comparative Examples

**[Table 1_sm_0001]**

| | Gram capacity mA h /g | Maximum temperature of thermal runaway/°C | Start time of thermal runaway/s | Thermal runaway phenomenon | Overcharge |
|---|---|---|---|---|---|
| Example 1 | 145 | 479 | 1463 | No fire, no explosion | Pass |
| Example 2 | 153 | 515 | 1417 | No fire, no explosion | Pass |
| Example 3 | 161 | 581 | 1396 | No fire, no explosion | Pass |
| Comparative Example 1 | 140 | 468 | 1479 | No fire, no explosion | Pass |
| Comparative Example 2 | 170 | 671 | 1282 | Fire but no explosion | NG |
| Comparative Example 3 | 178 | 793 | 915 | Fire and explosion | NG |

In Examples 1-3 and Comparative Examples 1-3, the positive electrode active materials are composed of lithium manganese iron phosphate and lithium nickel cobalt manganese oxide at the different formulation ratios. The addition mass ratios of lithium nickel cobalt manganese oxide in Examples 1-3 and Comparative Examples 1-3 are 10%, 30%, 50%, 0%, 60% and 70%, respectively. As may be seen from Table 1, as the addition ratio of lithium nickel cobalt manganese oxide in the positive electrode active material increases, the gram capacity of the battery also gradually increases. The gram capacity directly affects the energy density of the battery. The higher the gram capacity, the higher the energy density of the battery. However, as the addition ratio of lithium nickel cobalt manganese oxide in the positive electrode active material increases, the maximum temperature of thermal runaway also gradually increases, and the start time of thermal runaway becomes shorter and shorter, indicating that the thermal safety performance of the battery is weakened as the addition ratio of lithium nickel cobalt manganese oxide in the positive electrode active material increases. Therefore, in order to enable the battery to have both high energy density and high safety performance, it is necessary to control the mass ratio of lithium manganese iron phosphate and lithium nickel cobalt manganese oxide in the positive electrode active material within a certain range.

It may be seen from the test results of Examples 1-3 and Comparative Example 1 that when the mass proportion of lithium nickel cobalt manganese oxide in the positive electrode active material formed by the compounding of lithium manganese iron phosphate and lithium nickel cobalt manganese oxide does not exceed 50%, the maximum temperatures of thermal runaway each are within 600°C, the time at which thermal runaway starts exceeds 1400s, and no fire or explosion phenomenon occurs after thermal runaway. When the overcharge test is performed, each of the batteries does not catch fire or explode. This shows that when the mass proportion of lithium nickel cobalt manganese oxide in the positive electrode active material formed by the compounding of lithium manganese iron phosphate and lithium nickel cobalt manganese oxide is within 50%, the safety performance of the battery is higher, which can meet the safety standards of the battery. In addition, since the positive electrode active materials of Examples 1-3 include both lithium manganese iron phosphate and lithium nickel cobalt manganese oxide, the gram capacity of the battery is significantly higher than that of the positive electrode active material of Comparative Example 1, which only includes lithium manganese iron phosphate. That is to say, in Examples 1-3 of the present application, by including both manganese iron phosphate and lithium nickel cobalt manganese oxide in the positive electrode active material and controlling the ratio of the two within a certain range, the battery can have both high energy density and high safety performance.

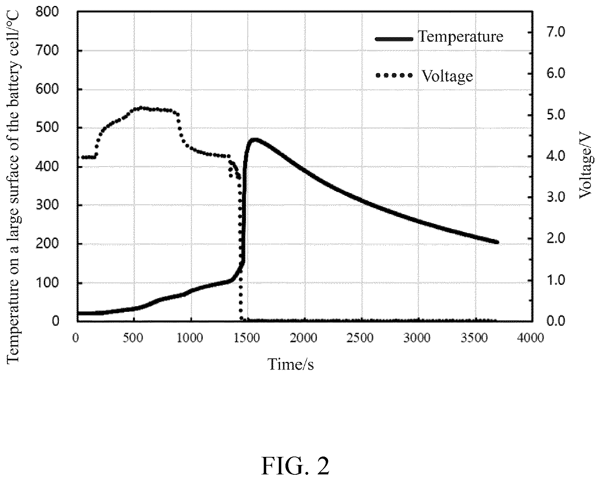

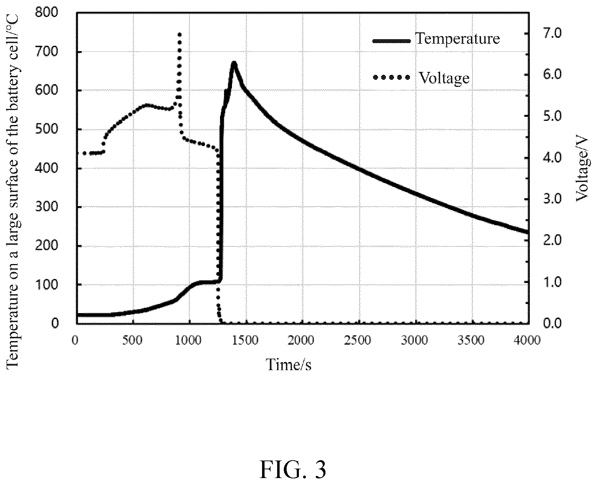

The graphs for thermal runaway tests of Example 2, Comparative Example 1 and Comparative Example 2 are shown in FIG. 1, FIG. 2 and FIG. 3, respectively. FIG. 1 is the graph for thermal runaway test when the positive electrode active material is 70% LMFP + 30% NCM (Example 2), in which the thermal runaway starts at 1417s, and the maximum temperature of thermal runaway is 515°C. FIG. 2 is the graph for thermal runaway test when the positive electrode active material is pure LMFP (Comparative Example 1), in which the thermal runaway starts at 1479s, and the maximum temperature of thermal runaway is 468°C. FIG. 3 is the graph for thermal runaway test when the positive electrode active material is 40% LMFP + 60% NCM (Comparative Example 2), in which the thermal runaway starts at 1282s, and the maximum temperature of thermal runaway is 671°C. As may be seen by comparative analysis, when the positive electrode active material is pure LMFP, the time at which thermal runaway starts is the longest, the temperature when thermal runaway occurs is the lowest, and there are no fire and no explosion during the process, indicating that the pure LMFP has the highest thermal stability. As the amount of the ternary material compounded in LMFP increases, the time at which thermal runaway starts becomes shorter and the maximum temperature of thermal runaway becomes higher, indicating that as the compounding amount of the ternary material increases, the thermal stability of the composite material system deteriorates. In FIG.3, when the incorporation amount of NCM is 60%, the fire phenomenon occurred during the thermal runaway test, indicating that the amount of the compounded ternary material should not be too high, as too high amount easily leads to obvious safety issues.

As may be seen from the test results of Examples 1-3 and Comparative Examples 2-3, when the mass proportion of lithium nickel cobalt manganese oxide in the positive electrode active material formed by the compounding of lithium manganese iron phosphate and lithium nickel cobalt manganese oxide is 60%, the maximum temperature of thermal runaway reaches 671°C, and the fire phenomenon occurs after thermal runaway occurs, and when the mass proportion of lithium nickel cobalt manganese oxide is 70%, the maximum temperature of thermal runaway is 793°C, the time at which thermal runaway occurs is shorter, and fire and explosion occur after thermal runaway occurs. The batteries in Comparative Examples 2-3 cannot pass the overcharge test. It may be seen from the above test results that when the mass proportion of lithium nickel cobalt manganese oxide in the positive electrode active material formed by the compounding of lithium manganese iron phosphate and lithium nickel cobalt manganese oxide exceeds 50%, although the gram capacity of the battery is enhanced and the energy density is increased, the safety of the battery drops sharply. In order to ensure the safety of the battery, the mass proportion of lithium nickel cobalt manganese oxide in the positive electrode active material does not exceed 50%.

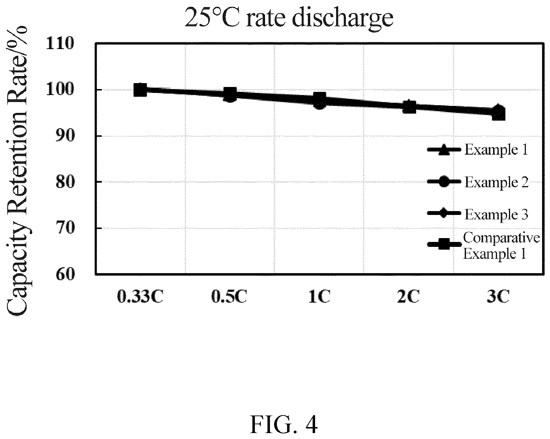

In addition, the rate discharge performance test was also performed on the batteries in Examples 1-3 and Comparative Example 1. The test method is as follows: rate performance: at 25°C, the battery was charged to 4.2 V at a current of 0.5C, and then discharged to 2.5 V at different rates. The results are shown in FIG. 4:
As may be seen from FIG. 4, when the proportion of lithium nickel cobalt manganese oxide in the positive electrode active material is controlled below 50%, the rate discharge performances of the batteries are basically the same. This shows that the addition of lithium nickel cobalt manganese oxide can ensure the safety performance of the batteries and maintain a certain high energy density, but will not affect other properties of the batteries such as the rate discharge performance.

## Claims

1. A positive electrode active material comprising lithium manganese iron phosphate and lithium nickel cobalt manganese oxide;
wherein, a mass ratio of the lithium manganese iron phosphate to the lithium nickel cobalt manganese oxide is (50-95): (5-50);
a general chemical formula of the lithium nickel cobalt manganese oxide is: LiNiₐCo_{b}Mn_{(1-a-b)}O₂, wherein 0.6 ≤ a<1, 0<b<0.5, 0<a + b<1.

2. The positive electrode active material according to claim 1, wherein a median particle diameter D50 of the lithium manganese iron phosphate is 0.5 µm-5 µm, and a specific surface area of the lithium manganese iron phosphate is 14 m²/g-25 m²/g.

3. The positive electrode active material according to claim 1 or 2, wherein a median particle diameter D50 of the lithium nickel cobalt manganese oxide is 4 µm-18 µm, and a specific surface area of the lithium nickel cobalt manganese oxide is 0.2 m²/g-1.5 m²/g.

4. The positive electrode active material according to any one of claims 1 to 3, wherein a chemical formula of the lithium manganese iron phosphate is LiMn_{0.6}Fe_{0.4}PO₄; or
a chemical formula of the lithium nickel cobalt manganese oxide is at least one of LiNi_{0.8}Co_{0.1}Mn_{0.1}O₂, LiNi_{0.7}CO_{0.1}Mn_{0.2}O₂ or LiNi_{0.9}CO_{0.05}Mn_{0.05}O₂.

5. The positive electrode active material according to any one of claims 1 to 4, wherein a mass ratio of the lithium manganese iron phosphate to the lithium nickel cobalt manganese oxide is 90:10;
or wherein a mass ratio of the lithium manganese iron phosphate to the lithium nickel cobalt manganese oxide is 70:30;
or a mass ratio of the lithium manganese iron phosphate to the lithium nickel cobalt manganese oxide is 50:50.

6. A positive electrode slurry, comprising the positive electrode active material according to any one of claims 1 to 5.

7. The positive electrode slurry according to claim 6, further comprising a positive electrode conductive agent, a positive electrode binder and a positive electrode dispersant;
wherein, a mass ratio of the positive electrode active material, the positive electrode conductive agent, the positive electrode binder and the positive electrode dispersant is (95-98): (0.5-2.5): (1-3) :(0-1).

8. The positive electrode slurry according to claim 7, wherein the positive electrode conductive agent is selected from at least one of carbon nanotube, graphene or acetylene black;
or, wherein the positive electrode binder comprises at least one of polyvinylidene fluoride, polytetrafluoroethylene or polyacrylic acid.

9. A positive electrode sheet, comprising a positive electrode foil and a positive electrode active layer coated on the positive electrode foil;
wherein, the positive electrode active layer is prepared by using the positive electrode slurry as claimed in any one of claims 6 to 8, or the positive electrode active layer comprises the positive electrode active material as claimed in any one of claims 1 to 5.

10. The positive electrode sheet according to claim 9, wherein the positive electrode foil is a carbon-coated aluminum foil;
the carbon-coated aluminum foil comprises an aluminum foil and a carbon coating layer coated on the aluminum foil, wherein a thickness of the aluminum foil is 6 µm-20 µm, and a thickness of the carbon coating layer is greater than 0 µm and less than or equal to 1 µm.

11. A battery comprising the positive electrode sheet according to claim 9 or 10.

12. The battery according to claim 11, further comprising a negative electrode sheet, an electrolyte and a separator;
optionally, the negative electrode sheet comprises a negative electrode foil, a negative electrode active material, a negative electrode conductive agent and a negative electrode binder;
wherein, the negative electrode foil is copper foil or copper mesh, and a thickness of the negative electrode foil is 4 µm-12µm.

13. The battery according to claim 12, wherein the electrolyte solution comprises an electrolyte, an organic solvent and an additive;
wherein the electrolyte is at least one of lithium hexafluorophosphate, lithium bisfluorosulfonimide or lithium bis(trifluoromethanesulfonyl)imide; the organic solvent comprises at least one of ethylene carbonate, dimethyl carbonate, diethyl carbonate polycarbonate or ethyl methyl carbonate; the additive comprises at least one of vinylene carbonate, vinyl sulfate, methylene methanedisulfonate, lithium bis(oxalatoborate) or 1,3-propane sultone;
a content of the additive accounts for 0.2%-1.5% of a total mass of the electrolyte solution.

14. The battery according to claim 12 or 13, wherein the separator comprises a base film and a separator coating coated on the base film;
wherein, a material of the base film is polypropylene or polyethylene; a material of the separator coating comprises at least one of aluminum oxide, boehmite, magnesium hydroxide or barium sulfate;
a thickness of the base film is 5 µm-16 µm, a thickness of the separator coating is 0.5 µm-5 µm, and a tensile strength of the separator coating is greater than 200 MPa.

15. A vehicle comprising the battery according to any one of claims 11-14.
